# EUROPÄISCHE PATENTSCHRIFT

(11) **EP 0 425 492 B1**
(45) Veröffentlichungstag und Bekanntmachung des Hinweises auf die Patenterteilung: **18.11.1993**
(21) Anmeldenummer: 89903684.2
(22) Anmeldetag: 06.04.1989
(51) Int. Cl.: H02K 9/26, B24B 55/00, B23Q 11/00

(54) **HANDWERKZEUGMASCHINE MIT DURCHZUGSBELÜFTETEM ANTRIEBSMOTOR**
HAND-HELD POWER-TOOL WITH ENCLOSED-VENTILATION DRIVE MOTOR
OUTIL A MAIN A MOTEUR D'ENTRAINEMENT BLINDE VENTILE

(30) Priorität: 16.07.1988 DE 3824234
(43) Veröffentlichungstag der Anmeldung: 08.05.1991
(73) Patentinhaber: ROBERT BOSCH GMBH, 70442 Stuttgart (DE)
(72) Erfinder: STRÖZEL, Reinhold, D-7022 Leinfelden-Echterdingen (DE); SCHWARZE, Wilhelm, D-7000 Stuttgart 80 (DE); STIRM, Helmut, D-7000 Stuttgart 70 (DE)
(86) Internationale Anmeldenummer: DE8900211
(87) Internationale Veröffentlichungsnummer: WO9000828

(56) Entgegenhaltungen:
- DE-C- 392 694
- DE-C- 944 976
- FR-A- 52 744
- US-A- 4 399 378

## Beschreibung

### Stand der Technik

Die Erfindung geht aus von einer Handwerkzeugmaschine nach der Gattung des Hauptanspruchs. Solche Maschinen sind hinlänglich z.B. in der Ausführungsform des Winkelschleifers bekannt. Zur Kühlung der Wicklungen der Elektromotoren dieser Handwerkzeugmaschinen wird in der Regel Umgebungsluft durch die Ständerwicklung durchziehende Kühlluftkanäle geblasen, wobei ein auf der Rotorwelle montiertes Lüfterrad für die notwendige Zwangskonvektion sorgt.

Problematisch bei durchzugsbelüfteten Motoren sind dabei die insbesondere bei Schleifmaschinen auftretenden festen Partikel im Kühl- luftstrom, die bei ihrem Weg durch das Innere des Motors Schaden an- richten können, so lehrt z.B. die EP-A 0 261 306 eine Schutzmöglich- keit für die Wickelköpfe des Ankers des Elektromotors mit über die Wickelköpfe erhaben vorstehenden Rippen, die vagabundierende Feststoffpartikel wegschleudern, bevor sie auf die Wickelköpfe auftreffen können.

Aus der FR-E-52 744 ist die Anordnung eines als Filter bzw. Sammler dienenden, schädliche Metallspäne und dergl. aufnehmenden magnetischen Teils im Gas-, Luft- bzw. Ölstrom von Maschinen bekannt. Dieses magnetische Teil muß immer dann von den angesammelten Metallspänen gereinigt werden, wenn deren Menge das Maß der magnetischen Haltekraft überschreitet. Eine ständige Kontrolle dieses "Filters" ist notwendig, weil es sich nicht automatisch reinigen kann

Mit der dort beschriebenen Einrichtung läßt sich allerdings nicht verhindern, daß mit der Durchzugsluft angesaugte Metallpartikel in das Innere eines Elektromotors eindringen und sich dort festsetzen.

Erfahrungsgemäß erfolgt die Festsetzung besonders an den Stellen, an denen aufgrund von Querschnittsänderungen des Kühlluftkanals Verwirbelungen im Strom der Durchzugsluft auftreten und an denen gleichzeitig starke magnetische Kräfte vorhanden sind. Besonders stark ist der magnetische Kraftfluß im Bereich des ringförmigen Spaltes zwischen dem Rotor und dem Stator einer Elektromaschine. Es hat sich in Versuchen gezeigt, daß sich die mit der Durchzugsluft herangebrachten Metallpartikel vorzugsweise in diesem Ringspalt sammeln. Die Anziehungskraft des im Ringspalt herrschenden magnetischen Feldes ist dabei so groß, daß auch verbesserte Dichtungen oder ein engerer Spalt zwischen Rotor und Stator das Eindringen von mit magnetisierbaren Partikeln behaftetem Staub in den Ringspalt zwischen Rotor und Stator nicht sicher verhindern können.

Hat sich genügend Stahl-Steinstaub im Ringspalt zwischen Rotor und Stator angesammelt, kommt es durch Festfressen des Rotors am Stator oder durch Zusetzen des Lagers zum Ausfall der Maschine.

### Vorteile der Erfindung

Die erfindungsgemäße Handwerkzeugmaschine mit den kennzeichnenden Merkmalen des Hauptanspruchs hat gegenüber dem Stand der Technik den Vorteil, das Eindringen von mit magnetisierbarem Material befrachtetem Schleifstaub in den Ringspalt zwischen Rotor und Stator zuverlässig zu verhindern.

Als weiterer Vorteil ist die einfache Durchführbarkeit der beanspruchten Lehre anzusehen. So genügt es, im Bereich des Kühlluftkanals einen Permanentmagneten anzuordnen, der den mit der Kühlluft angesaugten, mit magnetisierbarem Material beladenen Schleifstaub anziehen kann.

Durch die in den Unteransprüchen aufgeführten Maßnahmen sind vorteilhafte Weiterbildungen und Verbesserungen der im Hauptanspruch angegebenen Handwerkzeugmaschine möglich. Besonders vorteilhaft ist es, den Permanentmagneten auf der Rotorwelle in der Nähe des Lüfterrades anzuordnen. Von dem rotierenden Permanentmagneten geschleuderte Metallpartikel werden in diesem Falle mit dem Saugluftstrom aus der Maschine entfernt.

### Zeichnung

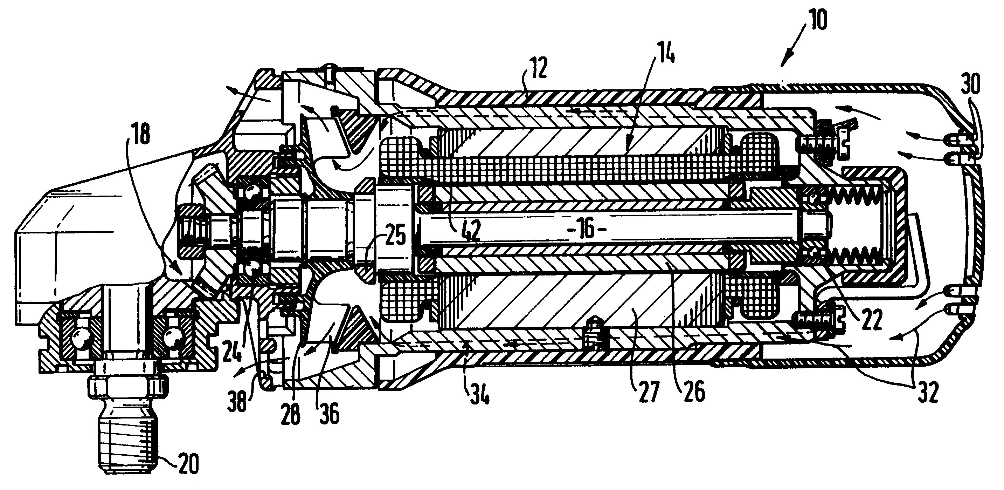

Ein Ausführungsbeispiel der Erfindung ist in der Zeichnung dargestellt und in der nachfolgenden Beschreibung näher erläutert. Die einzige Figur zeigt teilweise einen Winkelschleifer im Schnitt.

### Beschreibung des Ausführungsbeispiels

Ein Winkelschleifer 10 hat ein auch als Handhabe dienendes Gehäuse 12, in dem ein im Ausführungsbeispiel als Hochfrequenzmotor ausgeführter Elektromotor 14 angeordnet ist. Dessen Rotorwelle 16 treibt über ein Winkelgetriebe 18 eine Abtriebspindel 20 an, auf der beispielsweise ein hier nicht dargestelltes, scheibenförmiges Schleifwerkzeug befestigt werden kann.

Die Rotorwelle 16 ist in zwei Wälzlagern 22 und 24 gelagert. Zwischen den Wälzlagern 22 und 24 ist der Rotor 26, ein ringförmiger Permanentmagnet 25 und ein Lüfterrad 28 drehfest auf der Rotorwelle 16 angeordnet. Zur Zentrierung und axialen Positionierung von Rotor 26, ringförmigem Permanentmagneten 25 und Lüfterrad 28 dienen dabei in bekannter Weise verschiedene Durchmesser der Rotorwelle 16. Am hinteren (d.h., dem der Abtriebsspindel 20 abgewandten) Ende des Winkelschleifers 10 sind im Gehäuse 12 Durchbrüche 30 angeordnet, die Eintrittsöffnungen für einen vom Lüfterrad 28 angesaugten Luftstrom 32 bilden. Der zur Kühlung des Antriebsmotors dienende Luftstrom 32 verläuft durch in der Zeichnung gestrichelt angedeutete, im wesentlichen parallel zur Rotorwelle 16 verlaufende Ausnehmungen 34 zwischen den Wicklungen des Stators, um dann nach Passieren von Schaufeln 36 des Lüfterrades 28 den Winkelschleifer 10 durch im vorderen Bereich des Gehäuses 12 angeordnete Ausblasöffnungen 38 zu verlassen.

Wie aus der Zeichnung ersichtlich, streicht der Luftstrom 32 nach Verlassen der Ausnehmungen 34 im Stator 27 in der Nähe des dem Lüfterrad zugewandten Endes eines Ringspaltes 42 zwischen Rotor 26 und Stator 27 vorbei.

An dieser Stelle kann es vorkommen, daß der durch den Querschnittsübergang verwirbelte Luftstrom 32 soweit verlangsamt und gleichzeitig umgelenkt wird, daß metallbehafteter Schleifstaub von den im Ringspalt 42 herrschenden starken magnetischen Kräften angezogen wird. Der in diesem Bereich auf der Rotorwelle 16 montierte ringförmige Permanentmagnet 25 ist bezüglich seiner magnetischen Wirkung so stark ausgelegt, daß er die aus dem Ringspalt 42 streuenden magnetischen Kräfte übertrifft.

Metallpartikel, die sich auf dem Permanentmagnet 25 angesammelt haben, werden gegebenenfalls beim Betrieb des Winkelschleifers durch die auftretenden Zentrifugalkräfte so abgeschleudert , daß sie die Maschine mit der Durchzugsluft durch die Ausblasöffnungen 38 verlassen und so keinen Schaden mehr am Elektromotor anrichten können.

Selbstverständlich kann ein Permanentmagnet auch an anderer geeigneter Stelle innerhalb einer Handwerkzeugmaschine eingesetzt werden; der vorstehend beschriebene Selbstreinigungseffekt ergibt sich jedoch nur bei der im Ausführungsbeispiel beschriebenen Anordnung auf einem mit hoher Umlauffrequenz rotierenden Teil in der Nähe der Ausblasöffnung.

Natürlich kann die Erfindung auch vorteilhaft bei nichtelektrischen, also z.B. mit Druckluft angetriebenen Flügelzellenmotoren eingesetzt werden, um das Eintreten von Metallpartikeln zu verhindern. Auch für Antriebsmotoren in mit magnetisierbaren Stäuben belasteter Umgebungsatmosphäre, die nicht vollständig gekapselt werden können, ist die Erfindung geeignet.

## Patentansprüche

1. Handwerkzeugmaschine zur spanenden Bearbeitung von vorzugsweise magnetisierbaren Materialien mit einem Antriebsmotor, bei dem Luft aus der Umgebungsatmosphäre ins Innere der Handwerkzeugmaschine gelangt, insbesondere durchzugsbelüftetem Elektromotor, dadurch gekennzeichnet, daß im Luftkanal wenigstens ein auf der Rotorwelle (16) des Antriebsmotors (14) befestigter Permanentmagnet (25) angeordnet ist.

2. Handwerkzeugmaschine nach Anspruch 1 mit einem Elektromotor, dessen Statorwicklung durch die Anordnung wenigstens eines diesen im wesentlichen parallel zur Längsausdehnung des Stators durchdringenden Luftkanals luftgekühlt ist, dadurch gekennzeichnet, daß der Permanentmagnet (25) in einem Bereich des Luftkanals angeordnet ist, in dem der Kühlluftstrom (32) den Betrag und/oder die Richtung seiner Geschwindigkeit ändert

3. Handwerkzeugmaschine nach Anspruch 1 oder 2, dadurch gekennzeichnet, daß der Permanentmagnet (25) in der Nähe eines stirnseitigen Endes des Ringspalts (42) zwischen Stator (27) und Rotor (26) des insbesondere als Elektromotor (14) ausgebildeten Antriebsmotors angeordnet ist.

4. Handwerkzeugmaschine nach einem der Ansprüche 1 bis 3, dadurch gekennzeichnet, daß der Permanentmagnet (25) ringförmig um einen Bereich der Rotorwelle (16) herum angeordnet ist.

5. Handwerkzeugmaschine mit einem auf der Rotorwelle (16) des Antriebsmotors (14) befestigten Lüfterrad (28) nach Anspruch 3 oder 4, dadurch gekennzeichnet, daß der Permanentmagnet (25) zwischen Lüfterrad (28) und Wicklung des Rotors (26) angeordnet ist.

6. Handwerkzeugmaschine mit einem Antriebsmotor nach einem der vorhergehenden Ansprüche, bei dem Luft an dem dem Werkzeug abgewandten Ende angesaugt, über mindestens einen im Stator angeordneten Luftkanal geleitet und von einem auf der Rotorwelle des Antriebsmotors angeordneten Lüfterrad beschleunigt und durch am werkzeugseitigen Ende der Maschine angeordnete Ausblasöffnungen ausgeblasen wird, dadurch gekennzeichnet, daß der Permanentmagnet (25) in der Nähe des Lüfterrades (28) angeordnet ist.

7. Handwerkzeugmaschine nach einem der vorhergehenden Ansprüche dadurch gekennzeichnet, daß die magnetische Wirkung des Permanentmagneten am Ort seines Einbaus größer ist als die des Stators (27) und des Rotors (26).

8. Luftgekühlter Antriebsmotor, insbesondere für Schleifmaschinen oder für den Einsatz in mit magnetisierbaren Stäuben befrachteter Umgebungsatmosphäre, gekennzeichnet durch einen im Bereich des Kühlluftstroms (32) mit der Motorwelle umlaufenden Permanentmagneten (25).

9. Luftgekühlter Antriebsmotor nach Anspruch 8, dadurch gekennzeichnet, daß die in den Ansprüchen 2 bis 7 in Verbindung mit dem Motor in einer Handwerkzeugmaschine beanspruchten Merkmale verwendet werden.

## Claims

1. Powered hand tool for machining preferably magnetisable materials, having a drive motor in which air passes from the ambient atmosphere into the interior of the powered hand tool, in particular an enclosed-ventilated electric motor, characterised in that at least one permanent magnet (25) fixed to the rotor shaft (16) of the drive motor (14) is arranged in the air channel.

2. Powered hand tool according to Claim 1, having an electric motor whose stator winding is air-cooled by the arrangement of at least one air channel passing through this electric motor essentially parallel to a longitudinal extent of the stator, characterised in that the permanent magnet (25) is arranged in an area of the air channel in which the cooling-air flow (32) changes the magnitude and/or the direction of its velocity.

3. Powered hand tool according to Claim 1 or 2, characterised in that the permanent magnet (25) is arranged near a front end of the annular gap (42) between stator (27) and rotor (26) of the drive motor, designed in particular as an electric motor (14).

4. Powered hand tool according to one of Claims 1 to 3, characterised in that the permanent magnet (25) is arranged in an annular manner around an area of the rotor shaft (16).

5. Powered hand tool, having a fan wheel (28) fixed to the rotor shaft (16) of the drive motor (14), according to Claim 3 or 4, characterised in that the permanent magnet (25) is arranged between fan wheel (28) and winding of the rotor (26).

6. Powered hand tool having a drive motor according to one of the preceding claims, in which drive motor air is drawn in at the end remote from the tool, is directed via at least one air channel arranged in the stator and is accelerated by a fan wheel arranged on the rotor shaft of the drive motor and is blown out through blow-out openings arranged at the tool-side end of the machine, characterised in that the permanent magnet (25) is arranged near the fan wheel (28).

7. Powered hand tool according to one of the preceding claims, characterised in that the magnetic effect of the permanent magnet is greater at the point of its installation than that of the stator (27) and the rotor (26).

8. Air-cooled drive motor, in particular for grinding machines or for use in ambient atmosphere laden with magnetisable dust, characterised by a permanent magnet (25) rotating with the motor shaft in the area of the cooling-air flow (32).

9. Air-cooled drive motor according to Claim 8, characterised in that the features claimed in Claims 2 to 7 in combination with the motor in a powered hand tool are used.

## Revendications

1. Outil à main pour usinage par enlèvement de matière, de préférence de matériaux magnétisables avec un moteur d'entraînement, dans lequel passe l'air de l'atmosphère ambiante à l'intérieur de l'outil à main, notamment dans le moteur électrique ventilé par balayage, caractérisé en ce qu'on implante au moins un aimant permanent (25) fixé sur l'arbre de rotor (16) du moteur d'entraînement (14).

2. Outil à main selon la revendication 1, avec un moteur électrique dont le bobinage du stator est refroidi à l'air par l'implantation d'au moins un canal d'air traversant essentiellement parallèlement à l'extension longitudinale du stator, caractérisé en ce que l'aimant permanent (25) est implanté dans un domaine du canal d'air, où le courant d'air réfrigérant (32) modifie la valeur et/ou le sens de sa vitesse.

3. Outil à main selon la revendication 1 ou 2, caractérisé en ce que l'aimant permanent (25) est placé à proximité d'une extrémité frontale du jeu annulaire (42) entre le stator (27) et le rotor (26) du moteur d'entraînement réalisé notamment sous forme de moteur électrique (14).

4. Outil à main selon l'une des revendications 1 à 3, caractérisé en ce que l'aimant permanent (25) est disposé en bague autour d'un domaine de l'arbre de rotor (16).

5. Outil à main avec un ventilateur (28) fixé sur l'arbre de rotor (16) du moteur d'entraînement (14) selon la revendication 3 ou 4, caractérisé en ce que l'aimant permanent (25) est placé entre le ventilateur (28) et le bobinage du rotor (26).

6. Outil à main avec un moteur d'entraînement, selon l'une des revendications précédentes, dans lequel on aspire l'air à l'extrémité opposée à l'outil, air qui est guidé le long d'au moins un canal d'air implanté dans le stator et est accéléré par un ventilateur disposé sur l'arbre de rotor du moteur d'entraînement et qu'il est expulsé par les orifices de sortie de ventilation disposés à l'extrémité de la machine du côté de l'outil, caractérisé en ce que l'aimant permanent (25) est disposé à proximité du ventilateur (28).

7. Outil à main selon l'une des revendications précédentes, caractérisé en ce que l'effet magnétique de l'aimant permanent à son lieu d'implantation, est supérieur à celui du stator (27) et du rotor (26).

8. Moteur d'entraînement refroidi à l'air, notamment pour meuleuse ou pour l'utilisation en atmosphère environnante chargée de poussières magnétisables, caractérisé par un aimant permanent (25) qui tourne avec l'arbre du moteur dans la zone du courant d'air réfrigérant (32).

9. Moteur d'entraînement refroidi à l'air selon la revendication 8, caractérisé en ce qu'on utilise les caractéristiques revendiquées aux revendications 2 à 7 en rapport avec le moteur dans un outil à main.
